# EUROPÄISCHE PATENTANMELDUNG

(11) **EP 3 042 838 A1**
(43) Veröffentlichungstag der Anmeldung: **13.07.2016**
(21) Anmeldenummer: 15194196.0
(22) Anmeldetag: 12.11.2015
(51) Int. Cl.: B62M 6/90, B62J 9/00

(54) **MOTORISCH UND/ODER MIT MUSKELKRAFT BETREIBBARES FAHRZEUG UND VORRATSBEHÄLTNIS DAFÜR**

(30) Priorität: 09.01.2015 DE 102015200184
(71) Anmelder: Robert Bosch GmbH, 70442 Stuttgart (DE)
(72) Erfinder: Schleszies, Markus, 6844 Altach (DE)

(57) **Zusammenfassung**

Die vorliegende Erfindung betrifft ein motorisch und/oder mit Muskelkraft betreibbares Fahrzeug, das insbesondere als Elektrofahrrad (1) ausgebildet ist. Das Fahrzeug umfasst einen elektrischen Antrieb (5) und eine erste Halterung (3) mit einer ersten Halterungsschnittstelle (4). Die erste Halterungsschnittstelle (4) dient der Aufnahme eines Energiespeichermoduls (9), das eine erste Schnittstelle (11) zur Energieversorgung des elektrischen Antriebs (5) umfasst. Das Fahrzeug weist ferner ein Vorratsbehältnis (10) mit einer zweiten Schnittstelle (12) auf, wobei die zweite Schnittstelle (12) in die erste Halterungsschnittstelle (4) einsetzbar ist.

## Beschreibung

### Stand der Technik

Die vorliegende Erfindung betrifft ein motorisch und/oder mit Muskelkraft betreibbares Fahrzeug, das Speichervolumen zur Aufbewahrung von am Fahrzeug mitzuführenden Utensilien bereitstellt. Das Fahrzeug ist insbesondere als Elektrofahrrad ausgebildet. Zudem betrifft die vorliegende Erfindung auch ein Vorratsbehältnis, das platzsparend und ortsfest an einem solchen Fahrzeug befestigbar ist.

Motorisch und/oder mit Muskelkraft betreibbare Fahrzeuge, wie E-Bikes, Pedelecs und dergleichen, sind aus dem Stand der Technik in unterschiedlichen Ausgestaltungsformen bekannt. Solche Fahrzeuge sind oftmals mit Körben, Taschen, Kisten o.ä. ausgestattet, die auf den Gepäckträger gespannt werden und so ein Mitführen benötigter Utensilien ermöglichen. Aufgrund der losen Ablage der Gegenstände in den Körben und eine oft unzureichende Befestigung der Körbe und anderer Taschen am Fahrzeug, wird die Fahrakustik beeinträchtigt und es kann, gerade bei Fahrten über unwegsames Gelände, zum Verlust von Gegenständen kommen. In den Rahmen einspannbare oder im Rahmen festschnallbare Taschen bieten demgegenüber zwar Vorteile, sind aber nur begrenzt einsetzbar, haben sehr kleine Stauvolumina und müssen auf die entsprechende Rahmenform zugeschnitten sein.

### Offenbarung der Erfindung

Das erfindungsgemäße motorisch und/oder mit Muskelkraft betreibbare Fahrzeug gemäß Anspruch 1 hat demgegenüber den Vorteil, dass es einen ausreichend großen Stauraum zum sicheren Mitführen von Gegenständen bereitstellt. Das hierfür vorgesehene Vorratsbehältnis ist erschütterungssicher am Fahrzeug befestigbar und beeinträchtigt die Geräuschkulisse des Fahrzeugs nicht. Dies wird erfindungsgemäß dadurch erzielt, dass das Fahrzeug einen elektrischen Antrieb und eine erste Halterung mit einer ersten Halterungsschnittstelle zur Aufnahme eines Energiespeichermoduls, üblicherweise einer Batterie oder eines Akkumulators, umfasst. Das Energiespeichermodul weist, wie herkömmlich, eine erste Schnittstelle zur Energieversorgung des elektrischen Antriebs auf, die in die erste Halterungsschnittstelle einsetzbar ist und somit eine elektrische Verbindung zwischen dem Energiespeichermodul und dem elektrischen Antrieb des Fahrzeugs herstellt. Das Vorratsbehältnis hat eine zweite Schnittstelle, die ebenfalls in die erste Halterungsschnittstelle der ersten Halterung einsetzbar ist. Mit anderen Worten ist die Formgestaltung der zweiten Schnittstelle des Vorratsbehältnisses so, dass sie vorzugsweise den Abmaßen der ersten Schnittstelle des Energiespeichermoduls entspricht. Hierbei ist das Bereitstellen einer elektrischen Verbindung durch die zweiten Schnittstelle nicht erforderlich, so dass die zweite Schnittstelle aus einem elektrisch nicht leitenden, günstigen Material, beispielsweise aus Kunststoff, herstellbar ist, ohne Stabilitätseinbußen hinnehmen zu müssen. Das Vorratsbehältnis ist somit in die erste Halterungsschnittstelle einsetzbar und damit befestigbar. Einem Verrutschen, Wippen oder dergleichen während der Fahrt, selbst bei unwegsamem Gelände, kann effektiv vorgebeugt werden. Auch eine reversible Entnahme und Befestigung des Vorratsbehältnisses am Fahrzeug ist leicht möglich, was ein Befüllen und Entleeren des Vorratsbehältnisses vor Ort erleichtert. Durch die bereits am Fahrzeug vorgesehene erste Halterungsschnittstelle sind Hilfskonstruktionen zur Befestigung des Vorratsbehältnisses unnötig und eine Oberflächenbeschädigung durch nachträgliches Anbringen, Montieren und Mitführen des Vorratsbehältnisses wird vermieden. Der Gesamteindruck des erfindungsgemäßen Fahrzeugs wird ebenfalls nicht gestört, da das Vorratsbehältnis durch seinen Sitz in der ersten Halterung nicht als zusätzliches Objekt in die Optik des Fahrzeugs eingreift. Aus den vorstehend genannten Gründen ist das Fahrzeug vorzugsweise ein Elektrofahrrad.

Die Unteransprüche zeigen bevorzugte Weiterbildungen der Erfindung. Zum Schutz der im Vorratsbehältnis mitgeführten Gegenstände, insbesondere bei widriger Wetterlage, ist vorteilhaft vorgesehen, dass das Vorratsbehältnis wasserdicht ist.

Wenngleich es prinzipiell möglich ist durch die reversible Befestigungs- und Entnahmeoption des Vorratsbehältnisses aus der ersten Halterung das Vorratsbehältnis beim Verlassen des Fahrzeugs mit sich zu führen, so ist es doch ferner von Vorteil, wenn das Vorratsbehältnis eine Schließeinrichtung umfasst. Im Vorratsbehältnis mitgeführte Gegenstände können somit sicher aufbewahrt werden und sind effektiv vor Diebstahl geschützt.

Weiter vorteilhaft ist das Vorratsbehältnis zum Transport von Flüssigkeiten, und insbesondere als Trinkflasche, ausgebildet.

Um eine optimale Befestigung ohne Beeinträchtigung der Windschnittigkeit und Bedienbarkeit des Fahrzeugs zu ermöglichen, ist ferner vorteilhaft vorgesehen, dass die Außenmaße des Vorratsbehältnisses im Wesentlichen den Außenmaßen des Energiespeichermoduls entsprechen.

Zur Erleichterung der Aufbewahrung von Gegenständen im Vorratsbehältnis weist das Vorratsbehältnis vorzugsweise mehrere separate Innenfächer auf.

Um zusätzlich zur Vorratsfunktion durch Befestigen des Vorratsbehältnisses in der ersten Halterung, wahlweise auch eine Energiebereitstellung durch das Energiespeichermodul oder eine weitere Vorratsfunktion aufweisen zu können, umfasst das Fahrzeug vorteilhafterweise mindestens eine zweite Halterung mit einer zweiten Halterungsschnittstelle. Weitere Halterungen mit Halterungsschnittstellen können vorgesehen sein. Die erste Schnittstelle des Energiespeichermoduls und/oder die zweite Schnittstelle des Vorratsbehältnisses sind in die zweite Halterungsschnittstelle oder auch ggf. in eine der weiteren Halterungsschnittstellen einsetzbar. Hierbei ist, wie bereits dargelegt, mindestens die erste Halterungsschnittstelle zur elektrischen Verbindung mit der ersten Schnittstelle des Energiespeichermoduls eingerichtet.

Vorzugsweise sind die erste Halterungsschnittstelle der ersten Halterung und die zweite Halterungsschnittstelle der zweiten Halterung gleich, so dass das Energiespeichermodul und auch das Vorratsbehältnis variabel in die vorgesehenen Halterungen einsetzbar und mit den Halterungsschnittstellen verbindbar sind. Dies bedeutet mit anderen Worten, dass beide Halterungsschnittstellen elektrisch leitend ausgebildet sind, so dass das Energiespeichermodul zudem wahlweise in beide Halterungsschnittstellen eingesetzt und dem elektrischen Antrieb des Fahrzeugs Energie zugeführt werden kann. Die zweite Schnittstelle des Vorratsbehältnisses ist nicht elektrisch leitfähig ausgestaltet, jedoch in Form und Abmessungen vorteilhaft so ausgebildet, dass sie sowohl in die erste Halterungsschnittstelle als auch in die zweite Halterungsschnittstelle einsetzbar ist.

Der Fahrkomfort kann bei ungestörter Optik des Fahrzeugs dadurch optimiert werden, dass die erste und die zweite Halterung an einem Rahmen des Fahrzeugs angeordnet sind.

Ebenfalls erfindungsgemäß wird auch ein Vorratsbehältnis beschrieben. Das Vorratsbehältnis hat eine zweite Schnittstelle, durch die das Vorratsbehältnis in eine erste Halterungsschnittstelle einer ersten Halterung eines motorisch und/oder mit Muskelkraft betreibbaren Fahrzeugs mit elektrischem Antrieb einsetzbar ist. Die erste Halterungsschnittstelle dient üblicherweise dazu ein Energiespeichermodul, wie eine Batterie oder einen Akkumulator, aufzunehmen, und ist zur Energieversorgung des elektrischen Antriebs vorgesehen und damit elektrisch leitend ausgebildet. Durch die hohe Funktionalität des Vorratsbehältnisses, und insbesondere durch das Vorsehen einer zweiten Schnittstelle am Vorratsbehältnis, kann das Vorratsbehältnis einfach und stabil in eine Halterung des Fahrzeugs unter Verbinden der zweiten Schnittstelle mit der ersten Halterungsschnittstelle des Fahrzeugs eingesetzt werden. Die zweite Schnittstelle des Vorratsbehältnisses ist dabei in Form und Größe vorzugsweise gleich der ersten Schnittstelle des Energiespeichermoduls, kann aber elektrisch nichtleitend ausgebildet sein. Ein Verrutschen selbst bei kurvenreicher Strecke oder unwegsamem Gelände wird durch das Einsetzen der zweiten Schnittstelle in die erste Halterungsschnittstelle verhindert. Akustische Beeinträchtigungen aufgrund des angebrachten Vorratsbehältnisses werden durch das passgenaue Verbinden der zweiten Schnittstelle mit der ersten Halterungsschnittstelle effektiv vermieden. Das Vorratsbehältnis eignet sich insbesondere als portables, reversibel anordenbares Stauvolumen an einem Elektrofahrrad.

Ferner erfindungsgemäß wird auch die Verwendung einer ersten Halterung eines motorisch und/oder mit Muskelkraft betreibbaren Fahrzeugs, insbesondere eines Elektrofahrrads, beschrieben. Die erste Halterung dient üblicherweise dazu ein Energiespeichermodul aufzunehmen und umfasst hierfür eine erste Halterungsschnittstelle. Durch das Einsetzen des Energiespeichermoduls, das hierzu vorteilhafterweise eine erste Schnittstelle aufweist, in die erste Halterungsschnittstelle, wird zwischen dem elektrischen Antrieb des Fahrzeugs und dem Energiespeichermodul üblicherweise eine elektrische Verbindung hergestellt. Erfindungsgemäß wird die erste Halterung mit der ersten Halterungsschnittstelle zur Befestigung eines Vorratsbehältnisses verwendet.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Darstellung eines Elektrofahrrads gemäß einer ersten Ausführungsform der Erfindung,
- Figur 2: ein Teilausschnitt der ersten Halterung des Elektrofahrrads aus Figur 1 mit einem Vorratsbehältnis gemäß einem Ausführungsbeispiel der Erfindung und
- Figur 3: eine schematische Darstellung eines Elektrofahrrads gemäß einer zweiten Ausführungsform der Erfindung.

### Ausführungsformen der Erfindung

Nachfolgend wird die vorliegende Erfindung unter Bezugnahme auf die Figuren im Detail beschrieben. Hierbei beziffern gleiche Bezugszeichen gleiche Bauteile.

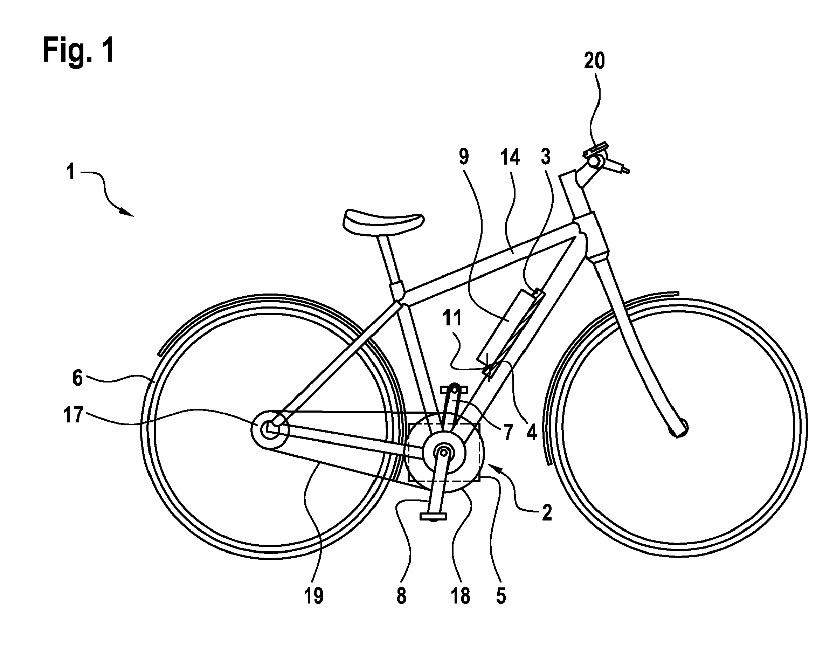

Wie aus Figur 1 ersichtlich ist, umfasst das Elektrofahrrad 1 einen Kurbeltrieb 2 mit zwei Kurbeln 7, 8, an dem Pedale angeordnet sind. Ein elektrischer Antrieb 5 ist in dem Kurbeltrieb 2 integriert. Am Hinterrad 6 ist eine Gangschaltung 17 angeordnet.

Ein Antriebsmoment, welches durch den Fahrer und/oder durch den elektrischen Antrieb 5 bereitgestellt wird, wird von einem Kettenblatt 18 am Kurbeltrieb 2 über eine Kette 19 auf Ritzel der Gangschaltung 17 übertragen.

Am Lenker des Fahrrads ist ferner eine Steuereinheit 20 angeordnet, welche mit dem elektrischen Antrieb 5 verbunden ist. Das Bezugszeichen 9 bezeichnet ein Energiespeichermodul, beispielsweise eine Batterie, welche zur Stromversorgung des elektrischen Antriebs 5 dient.

Das Elektrofahrrad 1 weist eine erste Halterung 3 mit einer ersten Halterungsschnittstelle 4 auf. Die erste Halterung 3 ist am Rahmen 14 des Elektrofahrrads 1 angeordnet.

Das Energiespeichermodul 9 hat eine erste Schnittstelle 11, die mit der ersten Halterungsschnittstelle 4 verbindbar ist, wenn das Energiespeichermodul 9 zur Energieversorgung eines elektrischen Antriebs 5 des Elektrofahrrads 1 in die erste Halterung 3 eingesetzt wird. Die erste Halterungsschnittstelle 4 sowie die erste Schnittstelle 11 sind dabei elektrisch leitend ausgebildet, so dass Energie vom Energiespeichermodul 9 auf den elektrischen Antrieb 5 übertragen werden kann.

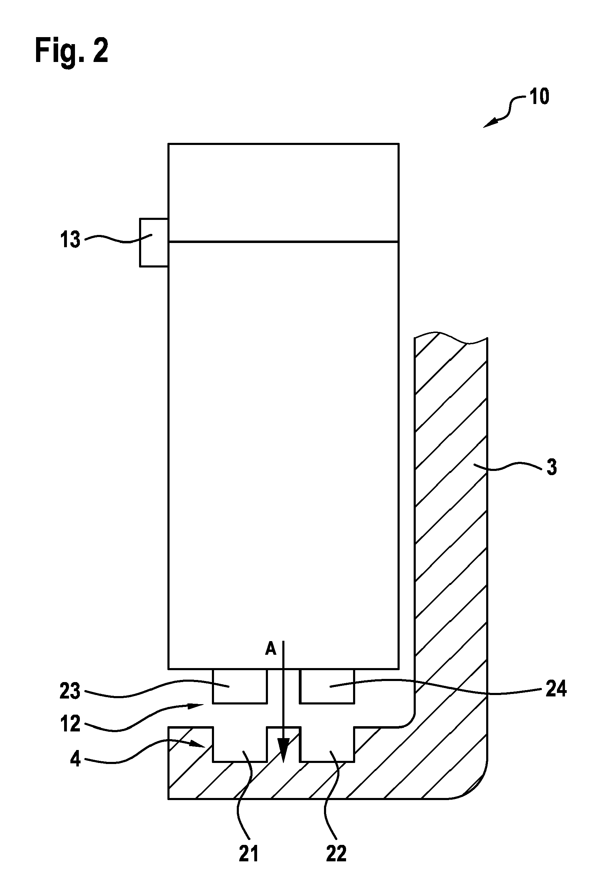

Das Elektrofahrrad 1 umfasst ferner ein Vorratsbehältnis 10, das in Figur 2 näher dargestellt ist. Figur 2 zeigt einen Teilausschnitt der Halterung 3 während des Einsetzvorganges des Vorratsbehältnisses 10. Das Vorratsbehältnis 10 dient zur Aufnahme und Beförderung von Utensilien und Gegenständen mit dem Elektrofahrrad 1 und besitzt hierzu vorteilhaft mehrere separate Innenfächer. Das Vorratsbehältnis 10 hat eine zweite Schnittstelle 12 in Form von zwei hervorstehenden Enden 23, 24, die in die erste Halterungsschnittstelle 4 einsetzbar sind. Die erste Halterungsschnittstelle 4 umfasst zur Aufnahme der Enden 23, 24 der zweiten Schnittstelle 12 zwei entsprechend ausgebildete Aufnahmen 21, 22. Damit ist das Vorratsbehältnis 10 in der ersten Halterung 3 anordenbar und mit der ersten Halterungsschnittstelle 4 des Fahrzeugs 1 verbindbar. So ist das Vorratsbehältnis 10 stabil und verrutschsicher am Elektrofahrrad 1 befestigbar. Durch das passgenaue Einbringen des Vorratsbehältnisses 10 kann die Geräuschkulisse des Elektrofahrrads 1 auf einem geringen Niveau gehalten werden. Die Enden 23, 24 der zweiten Schnittstelle 12 sind im Gegensatz zu entsprechenden Enden des Energiespeichermoduls 9 nicht elektrisch leitend ausgebildet und können beispielsweise aus Kunststoff bestehen.

Das Vorratsbehältnis 10 ist vorzugsweise wasserdicht und hat eine Schließeinrichtung 13. Die Schließeinrichtung 13 kann ein einfacher Riegel oder auch ein Verschlusssystem nach dem Schlüssel-Schloss-Prinzip sein, so dass Gegenstände sicher im Vorratsbehältnis 10 aufbewahrt werden können.

In Form und Funktion kann das Vorratsbehältnis 10 vorteilhaft auch als Trinkflasche bzw. zum Transport von Flüssigkeiten ausgebildet sein.

Die Außenmaße des Vorratsbehältnisses 10 entsprechen im Wesentlichen den Außenmaßen des Energiespeichermoduls 9.

Das Elektrofahrrad 1 weist durch das Vorhandensein des Vorratsbehältnisses 10 eine Zusatzfunktion auf, die den Fahrkomfort und die Einsatzfähigkeit des Elektrofahrrads 1 auch auf längeren Fahrstrecken erhöht. Oberflächenschäden durch nachträgliches Montieren eines Aufbewahrungsbehältnisses können durch das Einsetzen des Vorratsbehältnisses 10 in die erste Halterung 3 und Verbinden mit der ersten Halterungsschnittstelle 4 verhindert werden.

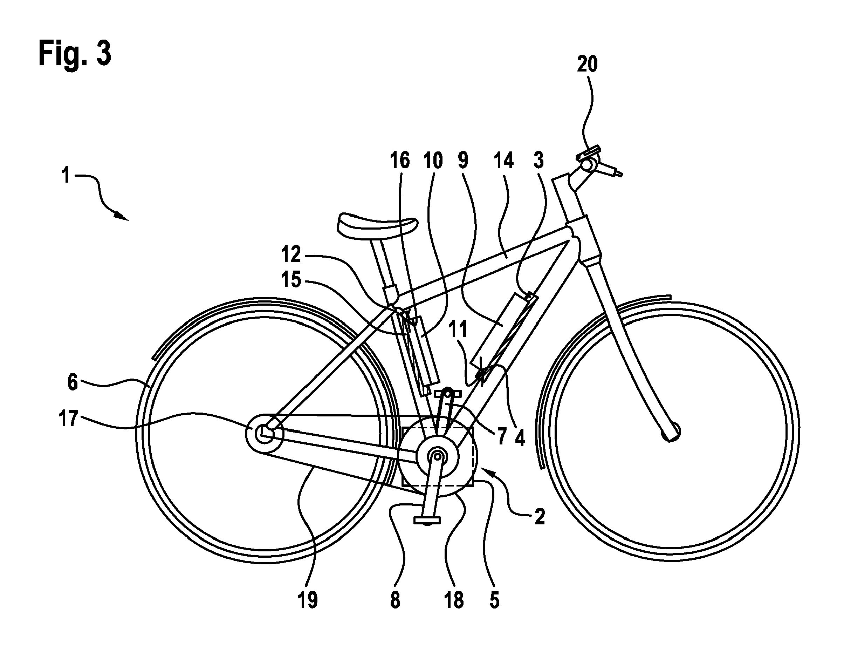

Figur 3 zeigt eine zweite erfindungsgemäße Ausgestaltung des Elektrofahrrads 1. Im Vergleich zu dem Elektrofahrrad aus Figur 1 weist das Elektrofahrrad 1 aus Figur 3 neben der ersten Halterung 3 eine zweite Halterung 15 auf. Auch die zweite Halterung 15 ist am Rahmen des Elektrofahrrads 1 angeordnet. Die zweite Halterung 15 weist eine zweite Halterungsschnittstelle 16 auf.

Die erste Halterungsschnittstelle 4 ist ausgebildet, die erste Schnittstelle 11 des Energiespeichermoduls 9 und/oder die zweite Schnittstelle 12 des Vorratsbehältnisses 10 aufzunehmen und eine sichere Verbindung zwischen den Komponenten herzustellen. Ferner ist die zweite Halterungsschnittstelle 16 ausgebildet, die erste Schnittstelle 11 des Energiespeichermoduls 9 und/oder die zweite Schnittstelle 12 des Vorratsbehältnisses 10 aufzunehmen und ebenfalls eine sichere Verbindung zwischen den Komponenten herzustellen. Somit können das Energiespeichermodul 9 und das Vorratsbehältnis 10 variabel in einer der Halterungen am Fahrzeug mitgeführt werden. Mindestens die erste Halterungsschnittstelle 4 ist elektrisch leitend ausgebildet. Beim Einsetzen des Energiespeichermoduls 9 in die erste Halterungsschnittstelle kann eine elektrische Verbindung zwischen dem Energiespeichermodul 9 und dem elektrischen Antrieb 5 hergestellt werden. Vorzugsweise ist auch die zweite Halterungsschnittstelle 16 elektrisch leitend ausgebildet, so dass das Energiespeichermodul 9 variabel in eine der Halterungen eingesetzt werden und eine elektrisch induzierte Fortbewegung des Fahrrads 1 ermöglicht werden kann. Mit anderen Worten sind vorteilhaft die erste Halterungsschnittstelle 4 der ersten Halterung 3 und die zweite Halterungsschnittstelle 16 der zweiten Halterung 15 gleich. Damit ist es zudem möglich, je nach Bedarf zwei Vorratsbehältnisse 10 oder zwei Energiespeichermodule 9 zu befestigen.

In einem weiteren Ausführungsbeispiel ist die Halterungsschnittstelle 4 als längliches Element ausgestaltet, welches am Unterrohr, Sattelrohr oder Oberrohr befestigt ist. Dabei ist bei der Halterungsschnittstelle 4 an einem länglichen Ende die erste Schnittstelle 11 und am anderen länglichen Ende eine dritte Schnittstelle bzw. ein erstes Halteelement vorgesehen. Das ebenfalls länglich ausgebildete Vorratsbehältnis 10 weist dabei neben der an einem länglichen Ende vorgesehenen zweiten Schnittstelle 12 am anderen länglichen Ende eine vierte Schnittstelle bzw. ein zweites Halteelement auf. Diese vierte Schnittstelle bzw. das zweite Halteelement ist derart ausgebildet, dass es in die dritte Schnittstelle bzw. das erste Halteelement eingefügt werden kann und/oder arretiert werden kann. Dies kann beispielsweise dadurch erreicht werden, indem das Vorratsbehältnis 10 mit seiner zweiten Schnittstelle 12 in die erste Schnittstelle 11 eingesetzt wird und mittels einer Drehbewegung die vierte Schnittestelle bzw. das zweite Halteelement in die dritte Schnittstelle bzw. das erste Halteelement der Halterungsschnittstelle 4 eingefügt wird.

Alternativ zu diesem Ausführungsbeispiel können die erste und dritte Schnittstelle auch durch separate Elemente realisiert sein, die voneinander beabstandet an einem der Rohre des Fahrradrahmens befestigt sind.

Darüber hinaus weisen die beiden vorstehenden Ausführungsbeispiele die gleichen Merkmale wie bei dem ersten Ausführungsbeispiel auf.

Die Verbindung der ersten und zweiten Schnittstelle kann neben einer rein mechanischen Befestigung bzw. Arretierung auch dazu genutzt werden, einen elektrischen Anschluss des Vorratsbehältnisses zum System des Elektrofahrrads herzustellen. So ist denkbar, dass an dem Elektrofahrrad ein weiterer Akkumulator angebracht ist, der über das elektrische Verteilersystem an dem Elektrofahrrad, z.B. über ein CAN-Bus, eine elektrische Vorrichtung in oder an dem Vorratsbehältnis mit elektrischer Energie versorgt. Alternativ kann auch vorgesehen sein, dass die Energieversorgung an das Vorratsbehältnis nur bei einem Rekuperationsvorgang erfolgt, z.B. bei einer Bergabfahrt oder einer Energieerzeugung durch das Treten der Kurbel. Mögliche elektrische Vorrichtungen in dem Vorratsbehälter können sein: eine Kühlungseinrichtung, eine Heizeinrichtung, eine Lampe, ein Funkempfänger/-sender und/oder ein Radio.

## Patentansprüche

1. Motorisch und/oder mit Muskelkraft betreibbares Fahrzeug, insbesondere Elektrofahrrad, umfassend:
- einen elektrischen Antrieb (5),
- eine erste Halterung (3) mit einer ersten Halterungsschnittstelle (4) zur Aufnahme eines Energiespeichermoduls (9), das eine erste Schnittstelle (11) zur Energieversorgung des elektrischen Antriebs (5) umfasst und
- ein Vorratsbehältnis (10) mit einer zweiten Schnittstelle (12),
- wobei die zweite Schnittstelle (12) in die erste Halterungsschnittstelle (4) einsetzbar ist.

2. Fahrzeug nach Anspruch 1, **dadurch gekennzeichnet, dass** das Vorratsbehältnis (10) wasserdicht ist.

3. Fahrzeug nach Anspruch 1 oder 2, **dadurch gekennzeichnet, dass** das Vorratsbehältnis (10) eine Schließeinrichtung (13) umfasst.

4. Fahrzeug nach einem der vorhergehenden Ansprüche, **dadurch gekennzeichnet, dass** das Vorratsbehältnis (10) zum Transport von Flüssigkeiten, und insbesondere als Trinkflasche, ausgebildet ist.

5. Fahrzeug nach einem der vorhergehenden Ansprüche, **dadurch gekennzeichnet, dass** die Außenmaße des Vorratsbehältnisses (10) im Wesentlichen den Außenmaßen des Energiespeichermoduls (9) entsprechen.

6. Fahrzeug nach einem der vorhergehenden Ansprüche, **dadurch gekennzeichnet, dass** das Vorratsbehältnis (10) mehrere separate Innenfächer aufweist.

7. Fahrzeug nach einem der vorhergehenden Ansprüche, **gekennzeichnet durch** eine zweite Halterung (15) mit einer zweiten Halterungsschnittstelle (16), wobei die erste Schnittstelle (11) des Energiespeichermoduls (9) und/oder die zweite Schnittstelle (12) des Vorratsbehältnisses (10) in die zweite Halterungsschnittstelle (16) einsetzbar ist.

8. Fahrzeug nach Anspruch 7, **dadurch gekennzeichnet dass** die erste Halterungsschnittstelle (4) der ersten Halterung (3) und die zweite Halterungsschnittstelle (16) der zweiten Halterung (15) gleich sind.

9. Fahrzeug nach einem der vorhergehenden Ansprüche, **dadurch gekennzeichnet dass** die erste Halterung (3) und die zweite Halterung (15) an einem Rahmen (14) des Fahrzeugs angeordnet sind.

10. Vorratsbehältnis umfassend eine zweite Schnittstelle (12), durch die das Vorratsbehältnis (10) in eine erste Halterungsschnittstelle (4) einer ersten Halterung (3) eines motorisch und/oder mit Muskelkraft betreibbaren Fahrzeugs, insbesondere eines Elektrofahrrads (1) mit elektrischem Antrieb (5), wobei die erste Halterungsschnittstelle (4) zur Aufnahme eines Energiespeichermoduls (9), zur Energieversorgung des elektrischen Antriebs (5) vorgesehen ist, einsetzbar ist.

11. Vorratsbehältnis nach Anspruch 10, **dadurch gekennzeichnet, dass** das Vorratsbehältnis länglich ausgestaltet ist, wobei an einem länglichen Ende die zweite Schnittstelle (12) und am anderen länglichen Ende eine vierte Schnittstelle und/oder ein zweites Halteelement vorgesehen ist.

12. Verwendung einer ersten Halterung (3) mit einer ersten Halterungsschnittstelle (4) zur Aufnahme eines Energiespeichermoduls (9) eines motorisch und/oder mit Muskelkraft betreibbaren Fahrzeugs, insbesondere eines Elektrofahrrads (1), zur Befestigung eines Vorratsbehältnisses (10).
